# EUROPEAN PATENT APPLICATION

(11) **EP 3 300 556 A1**
(43) Date of publication of application: **04.04.2018**
(21) Application number: 17192387.3
(22) Date of filing: 21.09.2017
(51) Int. Cl.: A01B 59/06

(54) **A HITCH ADAPTOR FOR AN AGRICULTURAL VEHICLE**

(30) Priority: 28.09.2016 EP 16290187
(71) Applicant: AGCO International GmbH, 8212 Neuhausen am Rheinfall (CH)
(72) Inventor: BOITTIN, Philippe, 60026 Beauvais (FR)
(74) Representative: AGCO Intellectual Property Department

(57) **Abstract**

There is described a hitch adaptor for an agricultural tractor. The hitch adaptor can be mounted to a tractor rear linkage, for subsequent connection to an implement for mounting to the tractor. The hitch adaptor has two frame elements which are vertically moveable relative to each other, so that a mounted implement can be vertically displaced without movement of the tractor rear linkage, and while maintaining the vertical alignment of the implement.

## Description

### Field of the Invention

The present invention relates to a hitch adaptor for an agricultural vehicle, in particular an agricultural tractor.

### Background of the Invention

Agricultural tractors are designed to couple with a variety of different implements, such as tillage devices, seeders, planters, sprayers, etc. The implements can be mounted to a tractor linkage, such as a rear three-point linkage, which allows for the raising and lowering of the implement relative to the tractor, as appropriate. As the links of a rear linkage are pivotably mounted to the tractor, accordingly the ends of the links and any mounted implements move along an arc when raising or lowering. This results in the tilting of the implement relative to the normal vertical axis. Such tilting may reduce in inefficient operation and/or spillage of material. Accordingly, an operator must exercise additional care and attention when adjusting the height of a mounted implement by actuation of a tractor linkage.

It is known to provide a quick hitch which can be used to provide a relatively simple and fast way for adapting a tractor linkage to couple with work implements. However, such quick hitches also suffer from any raising or lowering of the quick hitch and the attached implement resulting in deviation from the vertical axis.

As a result, it is an object of the invention to provide an improved system for movement of an implement when mounted to an agricultural tractor.

### Summary of the Invention

Accordingly, there is provided a hitch adaptor for an agricultural tractor comprising:
a first frame element for attaching to a tractor linkage;
a second frame element coupled with the first frame element, the second frame element forming a three-point hitch coupler for attaching to an implement to be mounted to the tractor;
wherein the second frame element is vertically moveable relative to the first frame element, to allow for vertical movement of an attached implement without movement of a tractor linkage.

By providing a hitch adaptor having separate frame parts moveable relative to one another, accordingly the position of an implement on the hitch adaptor can be adjusted by appropriate control of the hitch adaptor itself, and without movement of the tractor linkage. In addition, the use of moveable frame elements of the hitch adaptor allows for the vertical position of the implement to be changed without adjusting the vertical alignment. As a result, the attached implement can be retained in a vertical alignment for any height of the implement. This can provide advantages e.g. when moving the implement to a position for road transport.

Preferably, the hitch adaptor comprises at least one actuator coupled between the first and second frame elements to control the vertical movement of the second frame element relative to the first frame element.

The actuator may comprise any suitable device to facilitate movement of the second frame element relative to the first frame element, e.g. a linear actuator, a hydraulic cylinder, a rack-and-pinion mechanism.

Preferably, the first frame element is coupled to the second frame element via at least one guide rail, wherein the at least one guide rail maintains the vertical alignment of the second frame element relative to the first frame element.

One of the frame elements may be provided with a shuttle element mounted to a rail element provided in the other of the frame elements, such that the shuttle element allows for movement in a vertical direction along the rail element. As a result, the frame elements can be kept in relative vertical alignment, as one of the frame elements is moved relative to the other.

In one embodiment of the invention, the second frame element is arranged to be rotatable about the horizontal axis relative to the first frame element, to allow for control of the roll of the second frame element relative to the first frame element.

By allowing for the rotation of the second frame element relative to the first frame element, the second frame element, and by extension an implement mounted to the second frame element, can be adjusted about the roll axis or the longitudinal axis of the hitch adaptor. This provides for greater control of the orientation of an attached implement relative to the hitch adaptor and tractor.

Preferably, the first frame element comprises a pair of depending legs interconnected by a substantially horizontal support member.

Preferably, said horizontal support member and each of said depending legs provide connecting brackets adapted to be connected to corresponding draft links of a tractor for connecting the hitch adaptor to the rear linkage of a tractor.

Preferably, the second frame element comprises a pair of depending legs interconnected by a substantially horizontal support member.

Preferably, the second frame element comprises connecting portions for coupling with an implement. The connecting portions may comprise hooks, arms, latched connectors, etc.

Preferably, the hitch adaptor comprises at least one system connector for connection with a system of an agricultural tractor to which the hitch adaptor is attached, such that the movement of the second frame element relative to the first frame element can be controlled by the agricultural tractor.

In one aspect, the at least one system connector comprises a connector for a hydraulic system, wherein the vertical movement of the second frame element relative to the first frame element is controlled by the supply of hydraulic fluid to or from the hitch adaptor using the at least one system connector.

In an additional or alternative aspect, the at least one system connector comprises a connector for an electrical system, wherein the vertical movement of the second frame element relative to the first frame element is electrically controlled using the at least one system connector.

Additionally or alternatively, the vertical movement of the second frame element relative to the first frame element may be manually operated.

There is further provided an agricultural tractor having a hitch adaptor as described above. The hitch adaptor is preferably attached to a tractor linkage.

### Detailed Description of the Invention

Embodiments of the invention will now be described, by way of example only, with reference to the accompanying drawings, in which:
Fig. 1 is a side view of an agricultural tractor according to the invention;
Fig. 2A is front plan view of a hitch adaptor according to the invention;
Fig. 2B is a side plan view of the hitch adaptor of Fig. 2A; and
Figs. 3A, 3B and 3C provide a schematic illustration of the operation of the hitch adaptor of Fig. 2A when mounted to the rear linkage of a tractor.

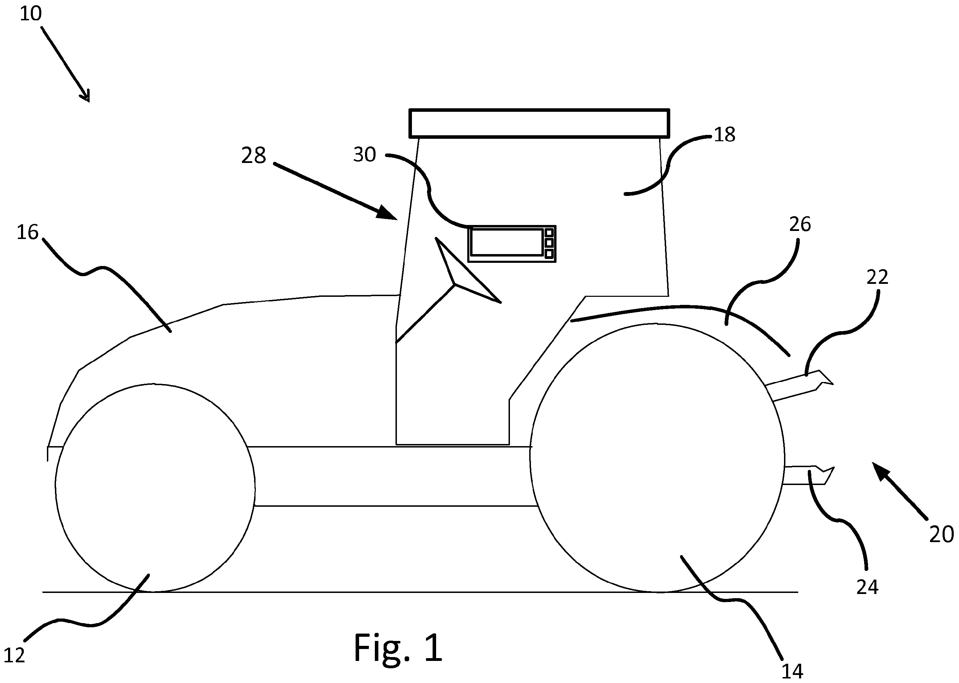

With reference to Fig. 1, a vehicle according to the invention in the form of an agricultural tractor is indicated at 10. The tractor 10 comprises front wheels 12 and rear wheels 14, a forward engine section 16 and a cab section 18. A rear linkage 20 is provided at the rear of the tractor 10, the rear linkage 20 having an upper link 22 and a pair of lower links 24. The rear linkage 20 can be actuated or moved using associated hydraulic cylinders. Rear fenders 26 are provided to cover a portion of the rear wheels 14.

Within the cab 18, an operator station 28 is provided. The operator station 26 comprises a user interface device 28 which is used to display information relating to tractor operation, and to control different elements of the tractor 10.

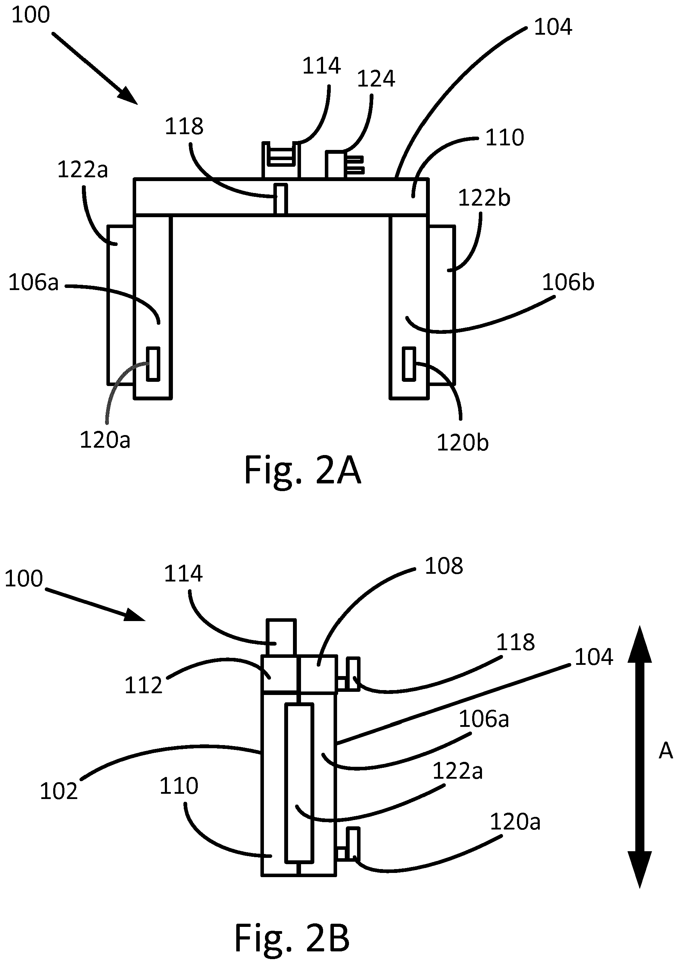

With reference to Figs. 2A and 2B, a hitch adaptor according to the invention is indicated at 100, for use with the rear linkage 20 for mounting to the agricultural tractor 10. The adaptor 100 comprises first and second frame elements 102,104. With reference to Fig. 2A, the second frame element 104 comprises a pair of depending legs 106a,106b interconnected by a substantially horizontal support member 108. With reference to the side profile shown in Fig. 2B, the first frame element 102 similarly comprises a pair of depending legs 110 interconnected by a substantially horizontal support member 112. The first and second frame elements 102,104 are arranged so that the structures of the frame elements 102,104 overlap to generally define an inverted U-shaped structure.

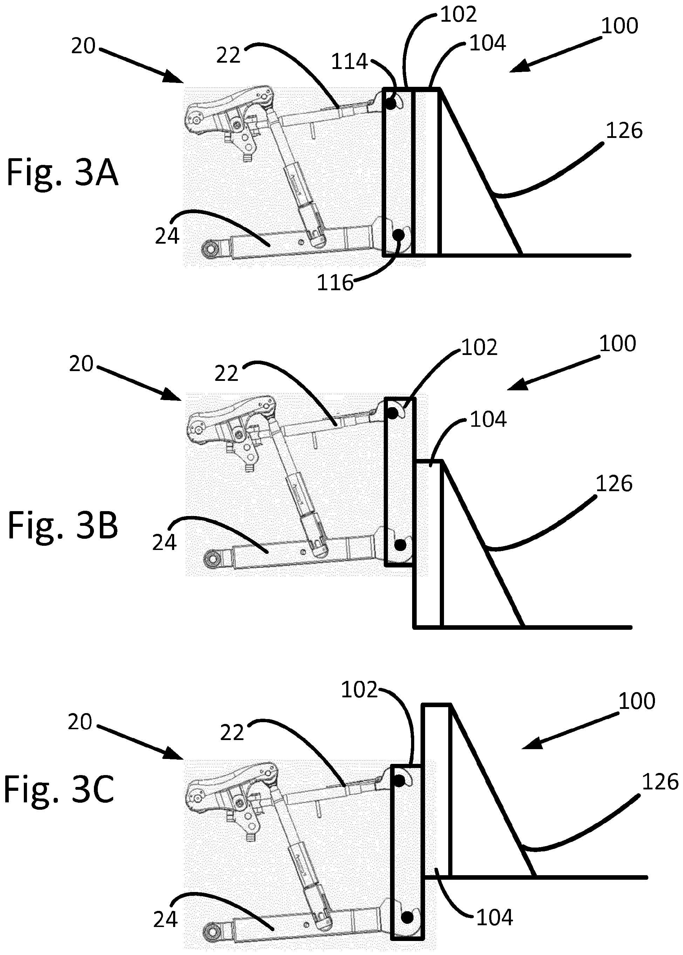

The first frame element 102 comprises a top link coupling element 114 which is arranged to be coupled with a top link 22 of a tractor rear linkage 20. The first frame element 102 further comprises a pair of bottom link coupling elements (116, Fig. 3A) which are arranged to be coupled with bottom links 24 of a tractor rear linkage 20. The top link coupling element 114 and the bottom link coupling elements 116 may comprise any suitable coupling device, e.g. a cross bar, which can be engaged by the links of a tractor rear linkage 20.

The second frame element 104 comprises an upper coupling element 118 provided on the horizontal support member 108, and a pair of lower coupling elements 120a, 120b provided towards the ends of the respective depending legs 106a,106b. The coupling elements 118,120a,120b are used to couple with an implement for mounting to the tractor 10. In the illustrated embodiment, the coupling elements 118,120a,120b are provided in the form of hook element, but it will be understood that any other suitable coupling elements may be used. For example, the second frame element 104 may be provided with a drawbar connector, a pin or piton connector, a ball connector, etc. It will further understood that the coupling elements 118,120a,120b may be lockable or latchable, to provide for releasable securing of an implement to the hitch adaptor 100.

The first and second frame elements 102,104 are moveable relative to one another along the vertical axis, as indicated by arrow X. In a preferred embodiment, an interconnection between the first and second frame elements 102,104 is formed by a guide rail formed on one of the first and second frame elements 102,104, wherein a shuttle element is formed on the other of the frame elements 102,104, the shuttle element arranged to move along the guide rail, allowing for linear movement between the frame elements 102,104.

The first and second frame elements 102,104 are connected via an actuator mechanism 122a,122b located at either side of the hitch adaptor 100. The actuator mechanism 122a,122b is configured to control the vertical movement of the second frame element 104 relative to the first frame element 102, and may comprise any suitable actuator system, e.g. a linear actuator, a hydraulic cylinder, a rack-and-pinion mechanism, etc.

The hitch adaptor 100 further comprises at least one system connector 124, which may be provided on the horizontal support member 112 of the first frame element 102. The system connector 124 is used to couple with the systems of the tractor 10, to allow for the operation of the hitch adaptor 100 to be controlled from the tractor 10, e.g. from the operator station 28 of the tractor cab 18. Depending on the type of actuator mechanism 122a,122b used, the system connector 124 can be an electrical systems connector, e.g. an ISOBUS connection, and/or a hydraulic connection, to control the actuation of the mechanism 122a,122b, and subsequently the vertical height of the second frame element 104 relative to the first frame element 102.

In an additional aspect, the hitch adaptor 100 can comprise a further system connection (not shown) for connection with the electrical and/or hydraulic systems of an attached implement. This can provide a pass-through connection between the tractor 10 and the attached implement, e.g. allowing the implement to be controlled from the operator station 28 of the tractor cab 18. It will further be understood that the adjustment of the vertical height of the second frame element 104 may also be accomplished by manual actuation, e.g. through an appropriate hand crank or lever mechanism provided on the hitch adaptor 100.

Figs. 3A, 3B and 3C schematically illustrate the operation of the hitch adaptor 100 of the invention when mounted to the rear linkage 20 of a tractor 10. In the illustrative Figs. 3A,3B,3C, some of the components of the hitch adaptor 100 are omitted for the purposes of clarity.

With reference to Fig. 3A, the hitch adaptor 100 is coupled with an attached implement, illustrated schematically at 126. The implement 126 can be held in a fixed position based on the position of the rear linkage 20. Through appropriate control of the actuator mechanism (122a,122b, Figs. 2A and 2B), the vertical height of the second frame element 104 and the attached implement 126 relative to the first frame element 102 and the rear linkage 20 can be adjusted as required.

In Fig. 3B, the second frame element 104 is lowered relative to the first frame element 102, such that the implement 126 is lowered, e.g. for engagement with the ground surface. In Fig. 3C, the second frame element 104 is raised relative to the first frame element 102, such that the implement 126 is held in a raised position. This may be done to provide greater ground clearance for the implement 126, e.g. during road transport. In both cases, when the implement 126 is raised or lowered, the vertical alignment of the implement is maintained.

Providing a hitch adaptor 100 as described allows for the vertical height adjustment of an attached implement without movement of a tractor rear linkage, and without moving the implement from a vertical alignment.

The invention is not limited to the embodiments described herein, and may be modified or adapted without departing from the scope of the present invention.

## Claims

1. A hitch adaptor for an agricultural tractor comprising:
a first frame element for attaching to a tractor linkage;
a second frame element coupled with the first frame element, the second frame element forming a three-point hitch coupler for attaching to an implement to be mounted to the tractor;
wherein the second frame element is vertically moveable relative to the first frame element, to allow for vertical movement of an attached implement without movement of a tractor linkage.

2. The hitch adaptor of claim 1, wherein the hitch adaptor comprises at least one actuator coupled between the first and second frame elements to control the vertical movement of the second frame element relative to the first frame element.

3. The hitch adaptor of claim 2, wherein the at least one actuator comprises at least one of the following: a linear actuator, a hydraulic cylinder, a rack-and-pinion mechanism.

4. The hitch adaptor of any one of claims 1-3, wherein the first frame element is coupled to the second frame element via at least one guide rail, wherein the at least one guide rail maintains the vertical alignment of the second frame element relative to the first frame element.

5. The hitch adaptor of claim 4, wherein one of the frame elements is provided with a shuttle element mounted to a rail element provided in the other of the frame elements, such that the shuttle element allows for movement in a vertical direction along the rail element.

6. The hitch adaptor of any one of claims 1-5, wherein the second frame element is arranged to be rotatable about the horizontal axis relative to the first frame element, to allow for control of the roll of the second frame element relative to the first frame element.

7. The hitch adaptor of any one of claims 1-6, wherein the first frame element comprises a pair of depending legs interconnected by a substantially horizontal support member.

8. The hitch adaptor of claim 7, wherein said horizontal support member and each of said depending legs provide connecting brackets adapted to be connected to corresponding draft links of a tractor for connecting the hitch adaptor to the rear linkage of a tractor.

9. The hitch adaptor of any one of claims 1-8, wherein the second frame element comprises a pair of depending legs interconnected by a substantially horizontal support member.

10. The hitch adaptor of claim 9, wherein the second frame element comprises connecting portions for coupling with an implement.

11. The hitch adaptor of any one of claims 1-10, wherein the hitch adaptor comprises at least one system connector for connection with a system of an agricultural tractor to which the hitch adaptor is attached, such that the movement of the second frame element relative to the first frame element can be controlled by the agricultural tractor.

12. The hitch adaptor of claim 11, wherein the at least one system connector comprises a connector for a hydraulic system, wherein the vertical movement of the second frame element relative to the first frame element is controlled by the supply of hydraulic fluid to or from the hitch adaptor using the at least one system connector.

13. The hitch adaptor of claim 11 or claim 12, wherein the at least one system connector comprises a connector for an electrical system, wherein the vertical movement of the second frame element relative to the first frame element is electrically controlled using the at least one system connector.

14. The hitch adaptor of any one of claims 1-13, wherein the vertical movement of the second frame element relative to the first frame element is manually operated.

15. An agricultural tractor having a hitch adaptor as claimed in any one of claims 1-14.
